# EUROPEAN PATENT SPECIFICATION

(11) **EP 2 993 078 B1**
(45) Date of publication and mention of the grant of the patent: **22.03.2017**
(21) Application number: 15183145.0
(22) Date of filing: 31.08.2015
(51) Int. Cl.: B60N 2/70, B60N 2/28

(54) **SIDE IMPACT PROTECTION FOR CHILD SAFETY SEATS**
SEITENAUFPRALLSCHUTZ FÜR KINDERSICHERHEITSSITZE
PROTECTION CONTRE LES CHOCS LATÉRAUX POUR SIÈGES DE SÉCURITÉ POUR ENFANT

(30) Priority: 05.09.2014 NO 20141077
(43) Date of publication of application: 09.03.2016
(73) Proprietor: HTS Hans Torgersen & Sønn AS, 3535 Krøderen (NO)
(72) Inventor: van Mourik, Okke, 3514 BS Utrecht (NL); van der Veer, Erik, NL-3533 AD Utrecht (NL)
(74) Representative: Onsagers AS

(56) References cited:
- EP-A1- 1 757 206
- EP-A1- 2 570 299
- US-A1- 2013 328 368

## Description

The present invention is generally directed to child safety seats, and more particularly to a child safety seat using a mass of material having excellent cushioning or shock absorbing properties for protecting the body and particularly the head of a young child or infant seated in the child safety seat.

A child safety seat principally comprises a main body adapted to receive and securely hold a child or an infant and a base for supporting the main body. The main body of the child safety seat may be integrated with the base of the child safety seat, or the main body of the child safety seat and the base of the child safety seat may be releasably connected with each other. With the base fixed to a seat in a vehicle, the child safety seat is designed to assure safety for the child or infant placed in the vehicle while travelling.

The main body of the child safety seat includes a seat portion in which the child or infant sits, a backrest portion continuous from the seat portion against which the child or infant rests and a head portion usually provided with energy absorbing or cushioning elements. The main body also typically includes protective side wings or walls rising vertically out from the seat portion and backrest portion. The child safety seat thus assumes a shell structure in which the seat portion, the backrest portion, the head portion and the protective side wings or walls are formed unitarily in one piece and configured so as to make the child or infant seated as "wrapped" thereby almost completely. The child safety seat also includes harness assemblies in order to hold the child or infant fast to the main body of the child safety seat.

The child safety seat is provided for placement on a seat of the vehicle and for fixation thereto by means of a safety belt and/or Isofix connectors.

The different portions of the main body of the child safety seat are generally made integrally of a moulded one-piece plastic seat product from, for instance a polypropylene resin or the like. Such a hard-surfaced sheet, which itself is too solid and hence inadequate to protect the child or infant, is covered on its surfaces with a layer of a foamed material such as polyurethane, expanded polystyrene or the like, which in turn is covered on its surface with a skin layer of a cloth material filled with sponge or the like.

Thus, it has been customary to form the main body of the child safety seat as a seat squab or cushion that is highly elastic as a whole.

As such, known child safety seats are intended to help protect a child or an infant that is seated in the child safety seat during a collision of the vehicle. Such child safety seats typically do so by restraining the child or infant in the child safety seat during the collision.

Some child safety seats are also provided to absorb some of the energy of the impact to further protect and/or insulate the child.

Side impact collisions can be particularly problematic for all vehicle occupants, including children or infants seated in a child safety seat. During a side impact collision, the child's or infant's head can move violently sideways, which may cause their head to impact with the sides or the protective side wings of the child safety seat. Some child safety seats have attempted to address this problem by employing pads or additional cushioning in these side impact zones of the child safety seat.

US 8 690 237 B2 (deriving from patent application US 2013/0 328 368 A1 and corresponding to the preamble of claim 1) regards a child car seat, where the child car seat has a substantially rigid seat shell with a seating surface side and configured with a seat bottom section, a seat back section, and two side wings laterally spaced apart and protruding forward relative to an upper region of the seat back section. A support layer of substantially rigid foam material is positioned over at least the seating surface side of the side wings. A body of compressible resilient foam material is adjacent the support layer on at least the side wings. The body of compressible resilient foam has an outer surface that is substantially sealed. One or more air passages are in fluid communication between an interior within the outer surface of the body and the atmosphere.

EP 1 167 114 A1 regards a child safety seat, where the child safety seat at least in a head corresponding portion of the child safety seat main body is disposed a mass of a cushioning material which is capable of absorbing an impact by dispensing a pressure thereof. Such a mass of cushioning material is preferably a mass of gel material or a liquid sealed flexible bag.

EP 2 570 299 A1 regards a child safety seat for vehicle, where the child safety seat comprises an outer shell with a seating area for a child and side wings located on both sides of the seating area, whereas at least one side wing comprises at least one side impact-pusher-element.

EP 1 757 206 A1 regards a seat cushion pad for a vehicle, seat back pad for vehicle, and seat for vehicle, where the seat cushion pad, in which a part of or entire seating surface except the under-hip section is composed of a material b having a density lower than the density of a material a, or the seat back pad has any one of features described in the following items (i) to (iii). (i) Load-deflection lines of the material a and the material b are allowed to substantially agree with each other. (ii) Amounts of depression or static spring constants of the material a and the material b by a specific reaction force based on JASO-B408 testing method are allowed to substantially agree with each other. (iii) Reaction forces at a specific amount of deflection of the material a and the material b based on a push-pull gage measuring method are allowed to substantially agree with each other.

However, it has been found that such rigid foam materials not always work as intended, as the weight of a child's or infant's head is too small to compress the rigid foam such that an absorption of the forces is obtained. Furthermore, such rigid foam materials may also when compressed and reduced in bulk, having high elasticity, which will result in that the rigid foam material restore it's originally form. Such restoring forces applied on the child's or infant's head act as a counterforce to swing it back sideways. As a result, the child's or infant's head tends to swing from side to side a number of times and may cause severe damage.

Furthermore, due to regulatory requirements, the child safety seats cannot be wider than a certain width, whereby this will limit the possibilities to provide the child safety seat with additional cushioning and/or pads in side impact zones of the child safety seat.

Thus, there has therefore arisen a need for an alternative child safety seat as compared to those previously known, which will protect the child and in addition absorb energy during a collision with the vehicle.

It is an object of the present invention to minimize and possibly alleviate one or more of the disadvantages of the prior art, or to provide a useful alternative.

A further object of the present invention is to provide a child safety seat with side impact zones.

These objects are achieved with a child safety seat according to the following independent claim, with additional embodiments set forth in the dependent claims.

According to the present invention it is provided a child safety seat, where the child safety seat comprises a seat shell being divided into a sitting portion, a backrest portion and a head portion. One or more of said portions may also be provided with protective side walls, the protective side walls rising substantially vertically out from said portions, so as to protect the child or infant especially from side impact collisions. Furthermore, at least an inside of the seat shell is covered with a layer of a stiff foamed material and being supported by the inside of the seat shell, the layer of the stiff foam material covering at least the sitting portion, backrest portion, head portion and the protective side walls, where the stiff foam material over at least a part of each of the protective side wings is provided with at least one through-going opening, in which through-going opening at least one layer or a piece of a softer foam material is arranged, the softer material being a compressible resilient foam material.

The protective side walls may be provided with the same number of through-going opening(s), the through-going opening(s) having the same shape and/or size, or the protective side walls may be provided with a different number of through-going opening(s), where the through-going opening(s) have the same or different shape and/or size.

The through-going opening in the stiff foam material is provided in such a way that the stiff foam material will encompass or encircle the through-going opening completely when the layer(s) or piece(s) of the softer foam material is/are arranged in the through-going opening(s), thereby providing a "frame" around the softer foam material.

The through-going opening or openings provided in the protective side wings and the layer(s) or piece(s) of the softer foam material will then have a substantially same form (positive-negative shape) and size, such that the softer foam material can be pushed into the through-going opening. However, it should be understood that the softer foam material also could be connected or fixed to the through-going opening(s) by use of adhesive, bonding, heating or the like, such that the softer foam material cannot be moved relative the stiff foam material.

The layer or piece of the softer foam material may, when arranged in the through-going opening of the stiffer foam material, be of the same thickness as the stiffer foam material, where this can be obtained by using one or more layers of the softer foam material. The layers of the softer foam material may then have the same or different softness. However, it should be understood that the softer foam material also can be of a greater thickness than the stiffer foam material, whereby the softer foam material would then protrude a certain distance into the inside of the child safety seat.

It should also be understood that the layer or piece of the softer foam material could be comprised of several pieces, where the pieces may have different softness.

The stiff foam material may be light-weight foam, such as expanded polystyrene foam (EPS), expanded polypropylene (PPS) and other foamable materials which otherwise meet the product and regulatory requirements.

The stiff foam material may be moulded, bonded or the like to the inside of the seat shell. However, it could also be envisaged that the seat shell and the stiff foam material could be made as separate part having a corresponding form (positive-negative shape), the stiff foam material then fitting into the seat shell.

The layer or piece of softer foam material may for instance be polyether foam or the like. A person skilled in the art would know that other softer foam material also could be used, where these materials otherwise meet the product and regulatory requirements.

The child safety seat may further comprise a fabric upholstery or a skin layer of cloth material. The fabric upholstery or skin layer of cloth material will at least cover the inside of the child safety seat.

The child safety seat may further comprise a carrying handle.

Each through-going opening in the protective side walls is provided inside of an outer periphery of the protective side walls, whereby the whole outer circumference or periphery of the softer foam material will be covered by the stiff foam material when the softer foam material is arranged in the through-going opening.

The child safety seat may also comprise a separate head support, where the separate head support in appropriate ways may be connected to the head portion of the child safety seat. Furthermore, the separate head support may also be arranged to be adjustable relative the head portion and possibly also the backrest portion, whereby the separate head support can be adjusted correctly in relation to the child.

The separate head support may comprise a stiff and thin plastic plate, where the plate is covered by the softer foam material.

Other advantages and characteristics of the present invention will be apparent from the following detailed description, the appended drawings and the following claims, wherein
Figures 1A-1C show a child safety seat according to the present invention, where figure 1A is a front view of child safety seat, figure 1B is a side view of the child safety seat and figure 1C is a perspective view of the child safety seat,
Figure 2A is a cross section through the child safety seat shown in figure 1A, along line A-A, and figure 2B is a cross section through the child safety seat shown in figure 1B, along line B-B, and
Figure 3A is an exploded view of the child safety seat, showing the different elements, and Figure 3B is a partly exploded and perspective view of the child safety seat.

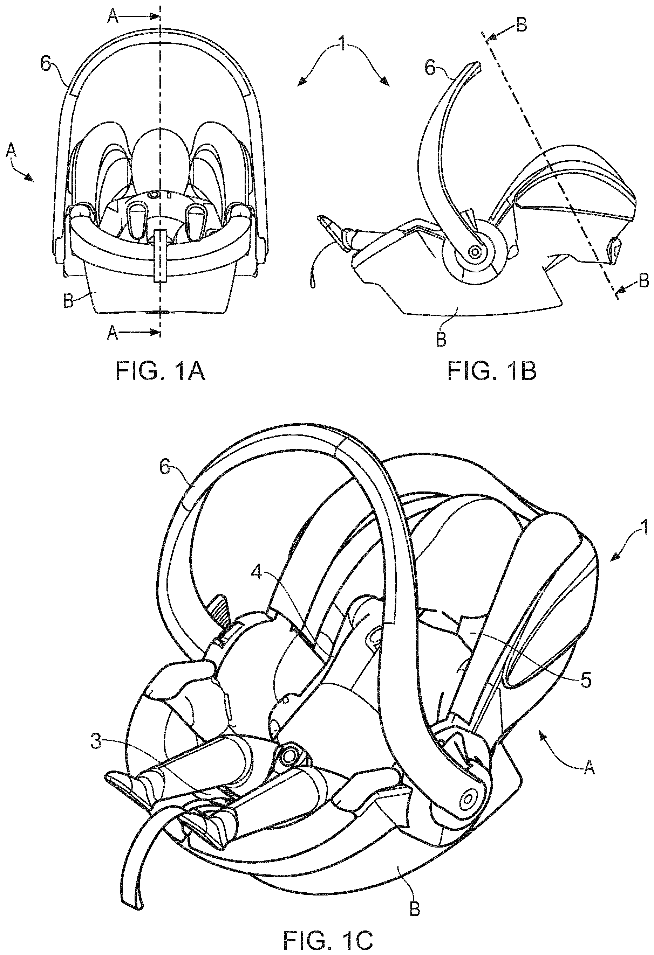

As shown in the embodiment of figure 1, the child safety seat 1 according to the present invention comprises a main body A adapted to receive and securely hold a child or an infant and a base B. The base B is adapted to be securely fixed to a bottom of a seat (not shown) of a vehicle such as a passenger car by means of a safety belt (not shown) or Isofix connectors (not shown) and is integrated with the main body A to support the main body A, thereby providing capability to assure safety for the child or infant securely held by the child safety seat 1 in the vehicle while travelling.

However, it could also be envisaged that the main body A and the base B of the child safety seat 1 could be made as separate parts, whereby the main body A in appropriate ways can be releasably connected and disconnected to the base B.

The main body A of the child safety seat 1 includes a sitting portion 3 on which a child or infant sits down and a backrest portion 4 on which the child or infant rests. The backrest portion 4 extends from the sitting section 3 and terminates into a headrest portion 5.

The child safety seat 1 includes a harness assembly (only partly shown) that properly positions and restrains the child or infant in the child safety seat 1. Conventional harnesses, such as a five-point or three-point harnesses are suitable, where these harnesses may vary according to the child safety seat confirmation, regulatory requirements and the existence of other elements in the child safety seat 1. A person skilled in the art would know how to form and arrange the harness assembly, whereby this is not described any further here.

The child safety seat 1 includes protective side walls over at least a part of the sitting portion 3, the backrest portion 4 and the headrest portion 5, so as to protect the child or infant during a side impact collision. The protective side walls may then extend vertically out from the different portions 3, 4, 5, or the protective side walls may extend outwards, forming an angle with the different portions 3, 4, 5.

The protective side walls may provide a right-side and a left-side armrest for the child or infant in the sitting portion 3 and provide a protection for the upper part of the body and the head of the child or infant over the backrest portion 4 and headrest portion 5.

The child safety seat 1 may be secured in the vehicle seat by conventional safety belt arranged in the vehicle or by standard anchorage means for Isofix connectors arranged in the vehicle seat. The child safety seat 1 must then be provided with safety belt guides (not shown) for capture and retention of a lap belt of the safety belt or with Isofix connectors (not shown).

The child safety seat 1 may also include a carrying handle 6 of conventional design. The carrying handle 6 is mounted on opposite sides of the child safety seat 1 at approximately the juncture of the sitting portion 3 and the backrest portion 4. A person skilled in the art would know that the carrying handle 6 could be designed to be adjustable between a position where the carrying handle 6 is used to support and fixate the child safety seat 1 in the vehicle seat when the child safety seat 1 is used, an intermediate position where the carrying handle 6 is used to carry the main body A of the child safety seat 1 when the main body A is disconnected from the base B, and a retracted position when the child safety seat 1 is not in use, in order to "compact" the child safety seat 1 due to available storage space.

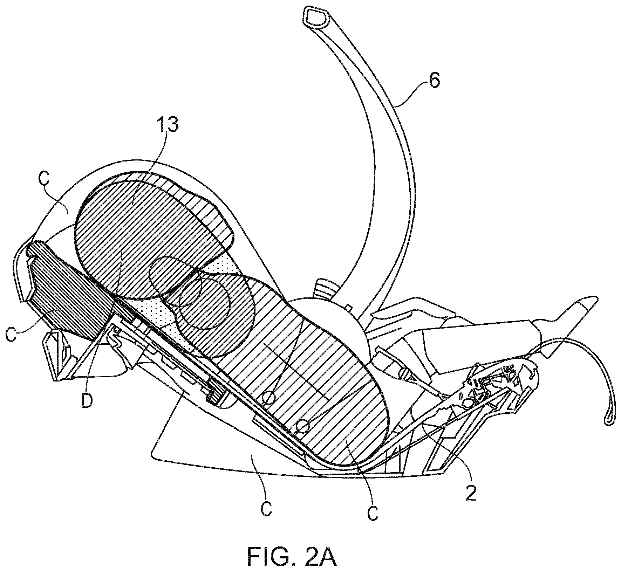

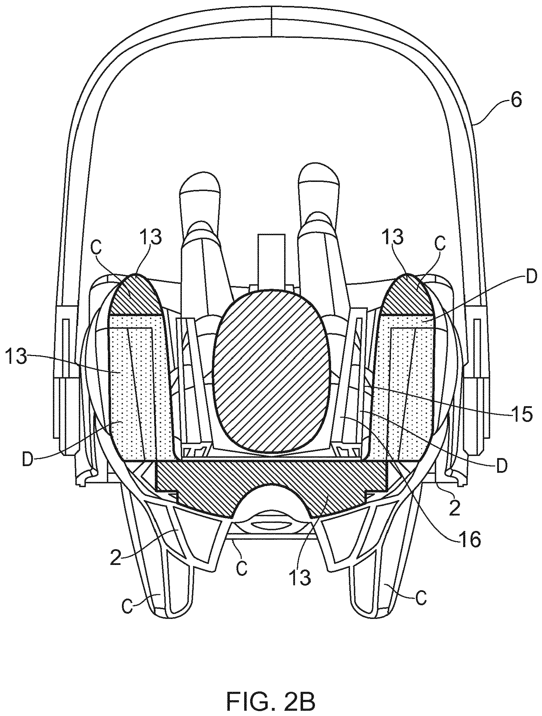

Referring now to figures 2A and 2B, the child seat 1 according to the present invention is constructed by providing an internal rigid core or skeleton 2 (a seat shell), the internal rigid core or skeleton 2 serving as a seat shell. Around the rigid core or skeleton 2 is arranged a lightweight, shape-providing stiff foam body C. The stiff foam body C is arranged at least on an inside of the internal rigid core or skeleton 2, an inside being the surface where the child or infant sits when they use the child safety seat 1. However, it should be understood that also an outer surface of the rigid core or skeleton 2 could be covered by the stiff foam body C.

The internal rigid core or skeleton 2 provides rigidity and strength to the child safety seat 1, as well as a structure to which lap belt guides, carrying handle, harness assembly, adjusting devices and other devices may be attached to and supported from.

The internal rigid core or skeleton 2 is formed in such a way that it provides the sitting portion 3 and the backrest portion 4 in the child safety seat 1, where the backrest portion 4 extends from the sitting portion 3 and further into the headrest portion 5.

The internal rigid core or skeleton 2 is preferably fabricated from polypropylene or similar polymeric material such as presently found in conventional child safety seats. However, a wide variety of substantially rigid materials can be used for the rigid core or skeleton 2, including but not limiting to plastics, metals or rigid fiber material, such as carbon-fiber, or other matrices that may include fibers, resins, plastics or combinations of these materials.

The stiff foam body C is preferably fabricated of light-weight foam, such as expanded polystyrene foam (EPS). Other materials from which the foam body C may be formed include urethane, expanded polypropylene (PPS) and other foamable materials that otherwise meet the product and regulatory requirements.

The stiff foam body C can, for instance, be connected to the internal rigid core or skeleton 2 by being injection-moulded onto and around the internal rigid core or skeleton 2, or the stiff foam body C could be fabricated as a separate part that could be glued to or otherwise connected to the internal rigid core or skeleton 2. When the stiff foam body C in appropriate ways has been connected to the internal rigid core or skeleton 2, the stiff foam body C provides the outer conformation of the child safety seat 1.

The extreme light-weight of the stiff foam body C permits the internal rigid core or skeleton 2 to have sufficient mass to provide enhanced strength and rigidity within the overall weight limitations of the child safety seat 1.

In one embodiment the rigid core or skeleton 2 and the stiff foam body C may be formed by an insert moulding process which is carried out by placing the core or skeleton 2 into a mould into which EPS or similar expanded foam such as expanded polypropylene (EPP), expanded polyurethane (EPU) or combination thereof, is injected to create a final part in the shape of the child safety seat 1, with the core or skeleton 2 securely and permanently embedded within the stiff foam body C.

In another embodiment the stiff foam body C may be formed as a separate part, but having a corresponding shape as the internal rigid core or skeleton 2. The separate part of the stiff foam body C can then be connected to the internal rigid core or skeleton 2 by means of adhesives, heating or the like, or by their corresponding form (positive-negative shape).

Furthermore, in figure 2B can be seen that the child safety seat 1 may also comprise a separate head support 15. The separate head support 15 may be arranged to be adjustable along the backrest portion 4, thereby being able to adjust the head support 15 more correctly in relation to the head and neck of the child or infant.

The head support 15 comprises a core element in the form of a stiff and thin plastic plate 16, where the stiff and thin plastic plate 16 is covered by a softer foam material D. The stiff and thin plastic plate 16 may then distribute the impact force evenly over the entire head support 15.

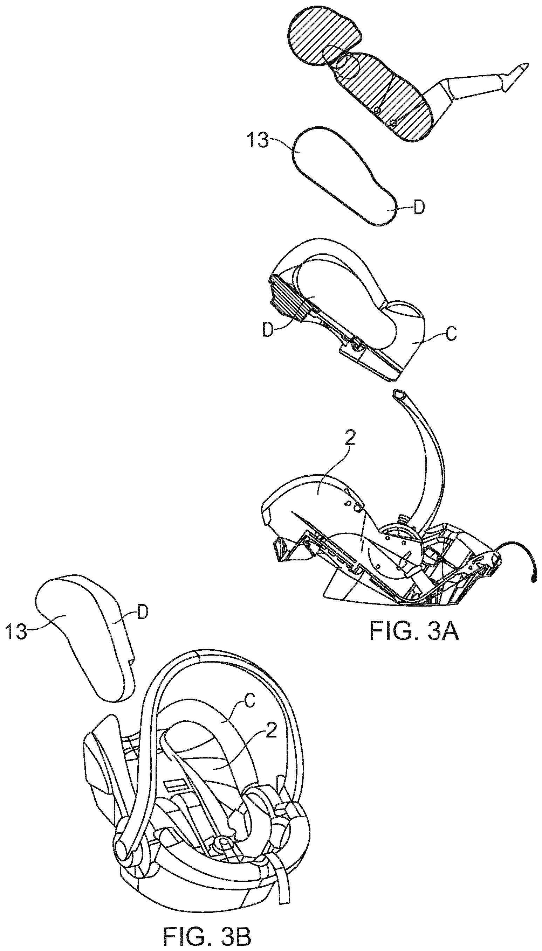

In figure 2A it can be seen that a part of the foam body C in the protective side wings (or walls), in an area covering the head, neck and at least a part of the child's or infant's upper body, is replaced by a piece of a softer foam material D. This will be explained further with reference to figures 3A and 3B.

Figures 3A and 3B show how the stiff foam body C that is covering the rigid core or skeleton 2, over a part that form the protective side wings in the child safety seat 1, is provided with at least one through-going hole O (only one protective side wing is shown), where the at least one through-going hole O will be of such a size that it will cover an area corresponding to the head, neck and at least a part of the child's or infant's upper body (figure 2A), or an area corresponding to the whole upper body of the child or infant (figure 3A and 3B).

The through-opening O can be cut out, or the foam body C can be manufactured with this at least one through-going opening O.

In this through-going opening O, on each side of the protective side wings, is arranged a piece 13 of a softer foam material D. The piece 13 of the softer foam material D has a form corresponding to the form of the through-going opening O, such that there is provided a tight connection between the protective side wings and the piece 13 of softer foam material D when the piece 13 of softer foam material is arranged in the through-going opening O.

The through-going opening O in the protective side wings is cut in such a way that the foam body C will form a closed frame, whereby the piece 13 of the softer foam material D will be completely encircled or enclosed by the stiff foam body C when the piece 13 of the softer foam material D is arranged in the through-going opening O.

As mentioned above, the stiff foam material C is a stiff foam material, for instance expanded polystyrene foam (EPS), expanded polypropylene (PPS) or the like. The piece 13 of the softer foam material D may for instance be polyether foam or other similar foamable materials.

The protective side wings may be provided with a same number of through-going opening(s) O, where the through-going opening(s) O have the same shape and/or size, or the protective side wings may be provided with a different number of through-going opening(s) O, where the through-going opening(s) O have the same or different shape and/or size.

Furthermore, the piece 13 of the softer foam material D may also comprise several layers, where the layers may have the same or different softness.

The invention has now been explained with the aid of several non-limiting exemplary embodiments. A person of skill in the art will understand that a number of variations and modifications can be made to the safety belt retention device as described within the scope of the invention as defined in the appended claims.

## Claims

1. Child safety seat (1), where the child safety seat (1) comprises a seat shell (2) being divided into a sitting portion (3), a backrest portion (4) and a headrest portion (5), one or more of the said portions (3, 4, 5) being provided with protective side walls, a stiff foam material (C) being arranged at least on an inside of the seat shell (2) and supported thereby,
**characterised in that** the stiff foam material (C) at least over a part of each of the protective side walls is provided with at least one through-going opening (O), in which at least one through-going opening (O) a softer foam material (D) is arranged, the softer foam material (D) being a compressible resilient foam material.

2. Child safety seat (1) according to claim 1,
**characterised in that** the at least one through-going opening (O) is provided inside of an outer periphery of the protective side walls.

3. Child safety seat (1) according to claim 1,
**characterised in that** the stiff foam material (C) is a light-weight foam, such as expanded polystyrene (EPS), expanded polypropylene (PPS) or the like.

4. Child safety seat (1) according to claim 1,
**characterised in that** the softer foam material (D) is a polyether foam or the like.

5. Child safety seat (1) according to claim 1,
**characterised in that** an inside of the child safety seat is covered by fabric upholstery.

6. Child safety seat (1) according to claim 1,
**characterised in that** the child safety seat (1) further comprises a carrying handle (6).

7. Child safety seat (1) according to claim 1,
**characterised in that** the softer foam material (D) comprises at least one layer.

8. Child safety seat (1) according to claim 1,
**characterised in that** the softer foam material (D) and the stiff foam material (C) are connected to each other through an adhesive, bonding, heating, positive-negative shape or the like.

9. Child safety seat (1) according to claim 1,
**characterised in that** the stiff foam material (C) is moulded, bonded or the like, or connected through a positive-negative shape to the inside of the outer seat shell (2).

10. Child safety seat (1) according to claim 1,
**characterised in that** the child safety seat (1) further comprises a separate head support.

11. Child safety seat (1) according to claim 10,
**characterised in that** the separate head support comprises a stiff and thin plastic plate covered by the softer foam material (D).

## Patentansprüche

1. Kindersicherheitssitz (1), wobei der Kindersicherheitssitz (1) eine Sitzschale (2) umfasst, die in einen Sitzabschnitt (3), einen Rückenlehnenabschnitt (4) und einen Kopfstützenabschnitt (5) unterteilt ist, wobei einer oder mehrere der Abschnitte (3, 4, 5) mit schützenden Seitenwänden versehen sind, wobei ein steifes Schaumstoffmaterial (C) wenigstens an einer Innenseite der Sitzschale (2) angeordnet ist und durch diese gehalten wird,
**dadurch gekennzeichnet, dass** das steife Schaumstoffmaterial (C) wenigstens über einen Teil von jeder der schützenden Seitenwände mit wenigstens einer Durchgangsöffnung (O) versehen ist, wobei in der wenigstens einen Durchgangsöffnung (O) ein weicheres Schaumstoffmaterial (D) angeordnet ist, wobei das weichere Schaumstoffmaterial (D) ein komprimierbares elastisches Schaumstoffmaterial ist.

2. Kindersicherheitssitz (1) nach Anspruch 1,
**dadurch gekennzeichnet, dass** die wenigstens eine Durchgangsöffnung (O) an der Innenseite eines äußeren Umfangs der schützenden Seitenwände vorgesehen ist.

3. Kindersicherheitssitz (1) nach Anspruch 1,
**dadurch gekennzeichnet, dass** das steife Schaumstoffmaterial (C) ein Leichtschaum wie expandiertes Polystyrol (EPS), expandiertes Polypropylen (PPS) oder dergleichen ist.

4. Kindersicherheitssitz (1) nach Anspruch 1,
**dadurch gekennzeichnet, dass** das weichere Schaumstoffmaterial (D) ein Polyetherschaum oder dergleichen ist.

5. Kindersicherheitssitz (1) nach Anspruch 1,
**dadurch gekennzeichnet, dass** eine Innenseite des Kindersicherheitssitzes mit einer Stoffpolsterung bedeckt ist.

6. Kindersicherheitssitz (1) nach Anspruch 1,
**dadurch gekennzeichnet, dass** der Kindersicherheitssitz (1) ferner einen Tragegriff (6) umfasst.

7. Kindersicherheitssitz (1) nach Anspruch 1,
**dadurch gekennzeichnet, dass** das weichere Schaumstoffmaterial (D) wenigstens eine Schicht umfasst.

8. Kindersicherheitssitz (1) nach Anspruch 1,
**dadurch gekennzeichnet, dass** das weichere Schaumstoffmaterial (D) und das steife Schaumstoffmaterial (C) durch ein Haftmittel, Verbinden/Verlleben, Erhitzen, eine positive/negative Form oder dergleichen miteinander verbunden sind.

9. Kindersicherheitssitz (1) nach Anspruch 1,
**dadurch gekennzeichnet, dass** das steife Schaumstoffmaterial (C) an die Innenseite der äußeren Sitzschale (2) angeformt, fest verbunden/verkeklebt oder dergleichen ist oder durch eine positive/negative Form mit ihr verbunden ist.

10. Kindersicherheitssitz (1) nach Anspruch 1,
**dadurch gekennzeichnet, dass** der Kindersicherheitssitz (1) ferner eine separate Kopfstütze umfasst.

11. Kindersicherheitssitz (1) nach Anspruch 10,
**dadurch gekennzeichnet, dass** die separate Kopfstütze eine steife und dünne Kunststoffplatte umfasst, die von dem weicheren Schaumstoffmaterial (D) bedeckt ist.

## Revendications

1. Siège de sécurité pour enfant (1), où le siège de sécurité pour enfant (1) comprend une coque de siège (2) divisée en une portion d'assise (3), une portion de dossier (4) et une portion d'appui-tête (5), une ou plusieurs desdites portions (3, 4, 5) étant pourvues de parois latérales protectrices, un matériau en mousse rigide (C) étant agencé sur au moins un intérieur de la coque de siège (2) et supporté ainsi,
**caractérisé en ce que** le matériau en mousse rigide (C) sur au moins une partie de chacune des parois latérales protectrices est pourvu d'au moins une ouverture traversante (O), dans laquelle au moins une ouverture traversante (O) un matériau en mousse plus souple (D) est agencé, le matériau en mousse plus souple (D) étant un matériau en mousse résiliente compressible.

2. Siège de sécurité pour enfant (1) selon la revendication 1,
**caractérisé en ce que** l'au moins une ouverture traversante (O) est prévue à l'intérieur d'une périphérie externe des parois latérales protectrices.

3. Siège de sécurité pour enfant (1) selon la revendication 1,
**caractérisé en ce que** le matériau en mousse rigide (C) est une mousse légère, telle que du polystyrène expansé (EPS), du polypropylène expansé (PPS) ou similaire.

4. Siège de sécurité pour enfant (1) selon la revendication 1,
**caractérisé en ce que** le matériau en mousse plus souple (D) est une mousse polyéther ou similaire.

5. Siège de sécurité pour enfant (1) selon la revendication 1,
**caractérisé en ce qu'**un intérieur du siège de sécurité pour enfant est recouvert de garnissage en tissu.

6. Siège de sécurité pour enfant (1) selon la revendication 1,
**caractérisé en ce que** le siège de sécurité pour enfant (1) comprend en outre une poignée de transport (6).

7. Siège de sécurité pour enfant (1) selon la revendication 1,
**caractérisé en ce que** le matériau en mousse plus souple (D) comprend au moins une couche.

8. Siège de sécurité pour enfant (1) selon la revendication 1,
**caractérisé en ce que** le matériau en mousse plus souple (D) et le matériau en mousse rigide (C) sont reliés l'un à l'autre par un adhésif, par collage, par chauffage, par une forme positive-négative ou similaire.

9. Siège de sécurité pour enfant (1) selon la revendication 1,
**caractérisé en ce que** le matériau en mousse rigide (C) est moulé, collé ou similaire, ou relié par une forme positive-négative à l'intérieur de la coque de siège externe (2).

10. Siège de sécurité pour enfant (1) selon la revendication 1,
**caractérisé en ce que** le siège de sécurité pour enfant (1) comprend en outre un support de tête séparé.

11. Siège de sécurité pour enfant (1) selon la revendication 10,
**caractérisé en ce que** le support de tête séparé comprend une plaque en plastique mince et rigide recouverte du matériau en mousse plus souple (D).
